(19) Europäisches Patentamt / European Patent Office / Office européen des brevets

(11) **EP 3 941 210 B1**

(12) **EUROPÄISCHE PATENTSCHRIFT**

(45) Veröffentlichungstag und Bekanntmachung des Hinweises auf die Patenterteilung:
**05.04.2023 Patentblatt 2023/14**

(21) Anmeldenummer: **20701604.9**

(22) Anmeldetag: **22.01.2020**

(51) Internationale Patentklassifikation (IPC):
*A23B 9/02* (2006.01)   *A23B 9/08* (2006.01)
*A23L 5/20* (2016.01)   *A23L 3/16* (2006.01)
*A23L 7/10* (2016.01)   *A23L 11/00* (2016.01)
*A23L 19/00* (2016.01)   *A23L 33/21* (2016.01)
*A23L 33/24* (2016.01)

(52) Gemeinsame Patentklassifikation (CPC):
(C-Sets verfügbar)
**A23L 7/10; A23B 9/02; A23B 9/08; A23L 3/165;
A23L 5/21; A23L 7/115; A23L 11/05; A23L 19/00;
A23L 19/09; A23L 33/21; A23L 33/24;**
A23V 2002/00 (Forts.)

(86) Internationale Anmeldenummer:
**PCT/EP2020/051500**

(87) Internationale Veröffentlichungsnummer:
**WO 2020/192981 (01.10.2020 Gazette 2020/40)**

(54) **VERFAHREN ZUR HERSTELLUNG EINES LEBENSMITTELERZEUGNISSES MIT HOHEM BALLASTSTOFFGEHALT UND GERINGER BELASTUNG**

METHOD FOR PRODUCING A FOOD PRODUCT HAVING A HIGH FIBRE CONTENT AND LOW CONTAMINATION

PROCÉDÉ DE PRODUCTION D'UN PRODUIT ALIMENTAIRE À HAUTE TENEUR EN FIBRES ET À FAIBLE CONTAMINATION

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **22.03.2019 DE 202019001360 U**

(43) Veröffentlichungstag der Anmeldung:
**26.01.2022 Patentblatt 2022/04**

(73) Patentinhaber: **Ehrler, Josef Immanuel
69493 Hirschberg an der Bergstraße (DE)**

(72) Erfinder: **Ehrler, Josef Immanuel
69493 Hirschberg an der Bergstraße (DE)**

(74) Vertreter: **Müller-Boré & Partner
Patentanwälte PartG mbB
Friedenheimer Brücke 21
80639 München (DE)**

(56) Entgegenhaltungen:
EP-A2- 0 455 259      WO-A1-2009/137945
WO-A1-2019/241152    KR-A- 20130 043 386

• **Jesus M Lopez-Guisa ET AL: "Processed Oat Hulls as Potential Dietary Fiber Sources in Rats", American Institute of Nutrition, 1 August 1988 (1988-08-01), pages 953-962, XP055756188, Retrieved from the Internet: URL:https://academic.oup.com/jn/article/118/8/953/4738930 [retrieved on 2020-12-03]**

(52) Gemeinsame Patentklassifikation (CPC): (Forts.)

C-Sets
A23V 2002/00, A23V 2250/5108, A23V 2300/16;
A23V 2002/00, A23V 2250/5108, A23V 2300/31

**Beschreibung**

Die vorliegende Erfindung betrifft ein Verfahren zur Herstellung eines Lebensmittelerzeugnisses mit hohem Ballaststoffgehalt und geringer Belastung.

Die moderne Ernährungsweise in den westlichen Ländern ist sehr kohlenhydratreich geprägt. Daher besteht die tägliche Ernährung zu einem hohen Anteil aus stärkehaltigen Lebensmitteln. In der Lebensmittelindustrie erfreuen sich helle und ausgemahlene Mehle insofern großer Beliebtheit bei den Konsumenten. Leider weisen helle Mehlsorten im Vergleich zu beispielsweise Vollkornprodukten aber einen deutlich geringeren Ballaststoffgehalt auf, was sich auf die Gesundheit der Konsumenten auswirkt. Zudem werden bei helleren Mehlen aber nicht nur die Ballaststoffe, sondern auch weitere essentielle Inhaltsstoffe entfernt. Aus diesem Grund werden von Ernährungswissenschaftlern Vollkornprodukte empfohlen. Durch die Bitterstoffe in den Randschichten der Getreide schmecken Vollkornprodukte in der Regel aber nicht so gut wie Produkte aus hellen Mehlsorten. Vollkornprodukte haben jedoch den vorstehenden Vorteil, dass sie einen relativ hohen Anteil an Ballaststoffen aufweisen. Ballaststoffe sind weitgehend nichtverdauliche Nahrungsbestandteile, welche einen positiven Einfluss auf die Verdauung und den Blutzuckerspiegel haben. Die Verwendung von Vollkornprodukten oder nur von z.B. Pflanzenschalen kann aber nachteilig für das jeweilige Lebensmittel sein, da solche Lebensmittel Belastungen durch beispielsweise Schimmelpilze, Radionuklide, pathogene Keime oder auch Schwermetalle aufweisen können.

Im Stand der Technik gibt es zahlreiche Verfahren zur Herstellung von Schadstoff/Extraktstoff-reduzierten Pflanzenschalen wie z.B. Getreideschalen. Beispielsweise beschreiben US 4,181,747 und CN 103549234 ein solches Verfahren. Dabei werden sämtliche nichtfaserigen Bestandteile mittels Säurebehandlung gelöst und ausgewaschen, was eine chemische Behandlung der beschriebenen Gemüse-, Hülsenfrucht- oder auch Getreideschalen beinhaltet.

CN 109295786 beschreibt ebenfalls ein Verfahren zur Herstellung von Schadstoff/Extraktstoff-reduzierten Getreideschalen. Hier werden zur Behandlung mehrere chemische Substanzen wie Hydroxylmethylcellulose, Harnstoffe und Alkaloide verwendet, wobei Verfahrensschritte wie vorherige Entstaubung, Kaltwasserreinigung, Vermahlung vor dem Kochprozess und anschließende Kochvorgänge mit chemischen Substanzen eingesetzt werden.

In US 5,308,618 wird Weizenkleie, welches ebenfalls eine Getreideschale darstellt, mit Wasser extrahiert, wobei diese extrahierte Lösung durch Aussalzen, Dialyse, Ultrafiltration, Umkehrosmose, Gelfiltration oder Ausfällung gereinigt wird.

US 2003/108652 beschreibt ein Bleichverfahren für Kleie, wobei hierfür Wasserstoffperoxid eingesetzt wird.

WO 2019/161079 beschreibt unter anderem die Extraktion von Weizenkleie, wobei die Schwermetalle im Wesentlichen mit Aktivkohle extrahiert werden.

EP 0 455 259 A2 beschreibt ein Verfahren zur Herstellung eines Maisschalen enthaltenden Lebensmittelerzeugnisses. WO 2019/241152 A1 beschreibt Verfahren zur Herstellung von Reiskleie. WO 2009/137945 A1 beschreibt ein Verfahren zur Herstellung von stabilisierter Reiskleie als Lebensmittelerzeugnis. KR 2013 0043386 A beschreibt ein Verfahren zur Herstellung eines auf polierter Reiskleie basierenden Lebensmittelerzeugnisses. Lopez-Guisa et al., American Institute of Nutrition, 1. August 1988, Seiten 953-962, beschreibt verarbeitete Haferspelzen als potentielle Ballaststoffquelle für Ratten.

Die Verbraucher wünschen sich aber vielmehr eine gesunde, chemie- bzw. extraktfreie Ernährungsweise, ohne die negativen Begleiterscheinungen einer konventionellen "ballaststoffreichen" Ernährungsweise. Daher liegt der vorliegenden Erfindung die Aufgabe zugrunde, ein Verfahren zur Erzeugung eines Lebensmittelerzeugnis bereitzustellen, welches einen hohen Ballaststoffgehalt und eine möglichst geringe Belastung aufweist.

Diese Aufgabe wird durch die in den Ansprüchen gekennzeichneten Ausführungsformen gelöst.

Die vorliegende Erfindung betrifft ein Verfahren zur Herstellung eines Lebensmittelerzeugnis, umfassend mehr als 40 Gew.-% Cellulose, und weniger als 0,0001 Gew.-% eines Bestandteils der Gruppe, bestehend aus Schimmelpilzen, Mykotoxinen, Radionukliden, pathogenen Keimen und Schwermetallen, ausgewählt aus Blei, Cadmium und Quecksilber, basierend auf 100 Gew.-% des Lebensmittelerzeugnisses, wobei das Lebensmittelerzeugnis eine Teilchengröße von kleiner als 0,5 mm, vorzugsweise kleiner als 0,1 mm, aufweist, wobei das Lebensmittelerzeugnis durch die Schritte in der folgenden Reihenfolge erhalten wird:

a) Quellen von Pflanzenbestandteilen in Wasser, wobei die Pflanzenbestandteile aus einem oder mehreren Bestandteilen der Gruppe, bestehend aus Haferspelzen, Dinkelspelzen, Haferschalen und Dinkelschalen, ausgewählt sind, wobei das Quellen für 1 bis 5 Minuten in kochendem Wasser durchgeführt wird, und wobei die Pflanzenbestandteile in einer wässrigen Aufschlämmung, enthaltend 10 bis 75 % der rohen Pflanzenbestandteile, vorliegen, und

b) Auspressen von Wasser aus den gequollenen Pflanzenbestandteilen des Schritts a), wobei zum Auspressen eine Schneckenpresse oder Ovalplattenpresse verwendet wird,

wobei in dem Verfahren keine Aktivkohle, keine Bleichmittel und keine hochsauren, hochbasischen oder enzymatischen Zusatzstoffe eingesetzt werden, wobei unter hochsauren bzw. hochbasischen Zusatzstoffen solche mit pH-Werten ≤ 5,7 bzw. ≥ 8,3 verstanden werden.

Das erfindungsgemäße Verfahren sieht weder den Einsatz von Aktivkohle noch von Bleichmitteln wie z.B. Wasserstoffperoxid oder hochsauren bzw. hochbasischen oder enzymatischen Zusatzstoffen vor, wobei unter hochsauren bzw. hochbasischen Zusatzstoffen solche mit pH-Werten ≤ 5,7 bzw. ≥ 8,3 verstanden werden. Solche Konzepte bzw. Verfahrensschritte sind gemäß der vorliegenden Erfindung ausgeschlossen.

Die Bestandteile der Gruppe, bestehend aus Schimmelpilzen, Radionukliden, pathogenen Keimen und Schwermetallen, ausgewählt aus Blei, Cadmium und Quecksilber, werden im Folgenden auch als "Belastungen" bezeichnet. Erfindungsgemäß umfasst das Lebensmittelerzeugnis mehr als 40 Gew.-% Cellulose und weniger als 0,0001 Gew.-% eines Bestandteils der Gruppe, bestehend aus Schimmelpilzen, Radionukliden, pathogenen Keimen und Schwermetallen, ausgewählt aus Blei, Cadmium und Quecksilber, basierend auf 100 Gew.-% des Lebensmittelerzeugnisses.

In einer Ausführungsform umfasst das Lebensmittelerzeugnis weniger als 0,00001 Gew.-% eines Bestandteils der Gruppe, bestehend aus Schimmelpilzen, Radionukliden, pathogenen Keimen und Schwermetallen, ausgewählt aus Blei, Cadmium und Quecksilber.

Unter dem Begriff "Radionuklid" sind erfindungsgemäß beispielsweise Uran-238, Uran-234, Radium-226, Radium-228, Blei-210, Polonium-210, Thorium-230, Thorium-232, Thorium-228 und Cäsium-137 zu verstehen.

Erfindungsgemäß sind "pathogene Keime" Krankheitserreger.

Gemäß der Erfindung werden die Pflanzenbestandteile im Schritt a) aus einem oder mehreren Bestandteilen der Gruppe, bestehend aus Haferspelzen, Dinkelspelzen, Haferschalen und Dinkelschalen, ausgewählt.

Gemäß der vorliegenden Erfindung kann ein Lebensmittelerzeugnis bereitgestellt werden, welches einen hohen Ballaststoffgehalt und eine möglichst geringe Belastung aufweist.

Einer Ausführungsform entsprechend besteht das erfindungsgemäß erhaltene Lebensmittelerzeugnis aus den Pflanzenbestandteilen, welche die Cellulose und die Belastungen umfassen, und Wasser.

Gemäß der vorliegenden Erfindung weist das dementsprechend erhaltene Lebensmittelerzeugnis eine Teilchengröße von kleiner als 0,5 mm auf. Eine Teilchengröße von kleiner als 0,5 mm ist vorteilhaft, da das Lebensmittelerzeugnis beim Kauen durch den Verbraucher nicht wahrgenommen wird. Einer weiteren Ausführungsform entsprechend weist das Lebensmittelerzeugnis eine Teilchengröße von kleiner als 0,1 mm auf. Durch diese geringe Teilchengröße wird das Lebensmittelerzeugnis beim Kauen durch den Verbraucher nicht wahrgenommen und ist zudem geschmacksneutral. Die Teilchengröße des Lebensmittelerzeugnisses wird mithilfe eines Siebs eingestellt. So bedeutet beispielsweise eine Teilchengröße von kleiner als 1 mm, dass ein Sieb mit einer Siebgröße von 1 mm verwendet wird und der Teil, der durch das Sieb hindurchtritt, als Lebensmittelerzeugnis gemäß der Erfindung verwendet wird.

Erfindungsgemäß wird im Schritt a) das Quellen von Pflanzenbestandteilen in Wasser durchgeführt. Dadurch können Belastungen aus den Pflanzenbestandteilen ausgewaschen werden, wobei der Einsatz von chemischen Zersetzungs- oder Umwandlungsprozessen zur Entfernung der Belastungen nicht nötig ist. Da die Verwendung von Chemikalien in der vorliegenden Erfindung vermieden wird, kann somit auch das Einbringen weiterer Belastungen in das Lebensmittelerzeugnis verhindert werden.

Gemäß der Erfindung wird das Quellen im Schritt a) in kochendem Wasser durchgeführt. Dadurch kann ein besonders effizientes Quellen der Pflanzenbestandteile erreicht werden.

Üblicherweise erfolgt die Verarbeitung durch Erhitzen einer Aufschlämmung der rohen Haferspelzen, Dinkelspelzen, Haferschalen und Dinkelschalen durch Wasser auf etwa 80-110°C und anschließendes mechanisches Entfernen des kontaminierten Wassers. Die erhöhte Temperatur der Aufschlämmung wird 1-5 Minuten, bevorzugt 1,5 bis 3 Minuten lang aufrechterhalten, während die Aufschlämmung gerührt wird. Die wässrige Aufschlämmung enthält 10-75 %der rohen Haferspelzen, Dinkelspelzen, Haferschalen und Dinkelschalen. Das kontaminierte Wasser wird dann mechanisch ausgepresst, um ein Fasermaterial mit etwa 20 bis 40% Feuchtigkeitsgehalt zu erhalten. Dieser Vorgang kann mehrmals wiederholt werden. Das entwässerte Fasermaterial wird dann auf einen Feuchtigkeitsgehalt von etwa 10-20%, vorzugsweise ca. 12-15 %, getrocknet, anschließend vermahlen und klassiert, gelagert und/oder verpackt.

Das Auspressen von Wasser aus den gequollenen Pflanzenbestandteilen im Schritt b) des erfindungsgemäßen Verfahrens erfolgt mittels Schneckenpresse oder Ovalplattenpresse. Durch den Schritt des Auspressens kann das überschüssige Wasser, welches die ausgewaschenen Belastungen enthält, entfernt werden.

In einer Ausführungsform kann nach Schritt b) ein Schritt des Trocknens und/oder Vermahlens durchgeführt werden. Die Maschinen, die zum Trocknen und/oder Vermahlen eingesetzt werden, sind nicht besonders eingeschränkt. Beispielsweise kann eine Prallmühle mit einer eingebauten Trocknungsanlage oder ein separater Trockner und/oder eine Mühle zum Vermahlen eingesetzt werden.

Gemäß einer Ausführungsform der vorliegenden Erfindung können die Schritte a) und b) mehrmals durchgeführt werden. Dabei kann nur der Schritt a), nur der Schritt b) oder beide Schritte in der Reihenfolge a) und b) mehrmals durchgeführt werden. Dadurch kann die Menge an Belastungen vorteilhaft reduziert werden.

Die vorliegende Offenbarung betrifft insofern insbesondere ein Verfahren zur Schad- und Extraktstoffreduzierung von Pflanzenschalenbzw. Pflanzenspelzen, d.h. Haferspelzen, Dinkelspelzen, Haferschalen und Dinkelschalen . Diese Reduzierung wird durch einen Kochprozess in Wasser und anschließendes Entfernen des kontaminierten Wassers durchgeführt. Eine wässrige Aufschlämmung (20 - 50% Trockensubstanz) von z.B. Getreideschalen wird mit einem Kochprozess in Wasser im Bereich von etwa 78 bis 120°C eingestellt und unter Rühren etwa 1 -60 Minuten, vorzugsweise 1 - 40 Minuten, bei dieser Temperatur gehalten, um die rohen Getreideschalen zu pasteurisieren. Durch diese Wasserpasteurisierung gehen die unerwünschten Substanzen wie Schimmelpilze und deren Mykotoxine, Öle, Schmutz, Stärke, Milben oder Mikroorganismen in das Wasser über. Durch den anschließenden Entwässerungsprozess wird dieses kontaminierte Wasser entfernt und der Pasteurisiervorgang abgerundet. Zum Entwässern werden Schneckenpressen oder Ovalplattenpressen verwendet. Je mehr Wasser in diesem Vorgang entfernt werden kann, desto qualitativ hochwertiger und wirtschaftlicher wird das Endprodukt.

Das Endprodukt sollte in Lebensmitteln nicht wahrgenommen werden und sollte daher eine vorzugsweise kleine Granulation aufweisen. Hierfür wirdeine Granulationsbandbreite des Pulvers < 0,5 mm vorgesehen. Zudem sollte es aus Haltbarkeitsgründen auf max. <15% getrocknet werden. Da aus energetischen Gründen zuerst getrocknet werden sollte, folgt nach der Entwässerungsphase üblicherweise eine Trocknungsphase (falls notwendig) auf ca. 14% Feuchtigkeit und eine darauffolgende Vermahlung und ggf. Klassierung, um die Partikel auf eine gesicherte Granulationsbandbreite zu sieben oder sichten. Als Trockner können alle Arten von Trocknern wie beispielsweise Bandtrockner, Schichttrockner, Rotortrockner u.v.m. verwendet werden. Es kann auch ein zusammengeführter Schritt wie eine Mahltrocknung verwendet werden, in der die Zerkleinerung und das Trocknen in einem Prozess stattfindet. Mit eingebauten Sichterlösungen kann sogar zusätzlich die Klassierung in diesem Schritt realisiert werden. Zur Vermahlung können alle Arten der Zerkleinerung wie Universalmühle, Rotormühle, Zahnscheibenmühle, Hammermühle u.v.m. angewendet werden. Zur Klassierung können Sichter- oder auch Siebmaschinen eingesetzt werden. Diese garantieren ein gleichmäßiges und qualitätssicheres Produkt.

Die vorliegende Erfindung ermöglicht es, ein Lebensmittelerzeugnis bereitzustellen, welches einen hohen Ballaststoffgehalt und eine möglichst geringe Belastung aufweist. Dabei wird das Lebensmittelerzeugnis ohne den Einsatz von chemischen Zersetzungs- oder Umwandlungsprozessen erhalten, wodurch das Einbringen von Belastungen in das Lebensmittelerzeugnis vermieden werden kann. Des Weiteren kann, abhängig von der Teilchengröße des Lebensmittelerzeugnisses, die Wahrnehmbarkeit dieses durch den Verbraucher eingestellt werden. So ermöglicht es die vorliegende Erfindung, ein beim Kauen nicht wahrnehmbares und geschmacksneutrales Lebensmittelerzeugnis bereitzustellen, so dass dieses vielfältig in Nahrungsmitteln eingesetzt werden kann.

Keine der vorstehenden Druckschriften wie US 4,181,747, CN 103549234, CN 109295786, US 5,308,618, US 2003/108652 oder WO 2019/161079 beschreibt einen Prozess zur Herstellung einer gesunden und naturbelassenen Pflanzenschale, Pflanzenkleie bzw. Pflanzenspelze, insbesondere Dinkel-, Gerste-, Hafer- oder Reisschale, welche Schadstoff- und Extraktstoff-reduziert ist. So besteht beispielsweise der verfahrenstechnologische Unterschied zwischen den Verfahren gemäß US 4,181,747 bzw. CN 103549234 darin, dass im Gegensatz zu dem erfindungsgemäßen Verfahren alle nichtfaserigen Bestandteile mittels Säurebehandlung gelöst und ausgewaschen werden, was wiederum eine chemische Behandlung der beschriebenen Gemüse-, Hülsenfrucht- oder auch Getreideschalen bedingt, wohingegen sich das erfindungsgemäße Verfahren dadurch auszeichnet, nicht die schädlichen Substanzen umzuwandeln, sondern diese mittels Kochprozess in Wasser überzuleiten und dieses kontaminierte Wasser zu entfernen. US 2003/108652 A beschreibt ein Bleichverfahren, welches dem naturbelassenen Konzept der vorliegenden Erfindung widerspricht. In WO 2019/161079A1 sollen Schadstoffe mittels Aktivkohle aufgenommen werden. Im erfindungsgemäßen Verfahren würde sich die Aktivkohle auflösen oder im Entwässerungsprozess vermahlen in das Endprodukt übergeleitet werden. Eine Entfernung der kontaminierten Aktivkohle wäre unmöglich, wobei der naturbelassene Grundgedanke durch die Zugabe von Kohle in Lebensmitteln ebenfalls scheitern würde.

Die nachstehenden Beispiele dienen als weitere Erläuterungen der vorliegenden Erfindung, ohne darauf beschränkt zu sein.

BEISPIEL I

Haferschalen (Haferspelzen), die zu Beginn der Verarbeitung verwendet wurden, wurden zuerst entstaubt, um die im Staub enthaltenen Schadstoffe zuvor zu entfernen. Die Schalen werden in geeigneten Vorrats- und Dosierbehältern gefördert, enthaltene Fremdkörper wie Metalle wurden beseitigt, was durch Vorsiebe, Metallabscheider, Magnete oder Schwergutabscheider erfolgen kann, und eine gleichmäßige Dosierung sichergestellt. Als nächstes wird mittels Dampf der Wassergehalt auf 50 bis 80% erhöht und ca. 1 - 40 Minuten bei einer erhöhten Temperatur von ca. 100°C gehalten. Die gekochten Schalen werden nun mittels Schneckenpresse auf den geringst möglichen Wassergehalt (ca. 35%) reduziert. Anschließend werden die Haferschalen mittels Bandtrockner auf abschließende 14% Endfeuchtigkeit getrocknet. Dieses getrocknete Gut wird mittels Hammermühle zerkleinert und durch einen Plansichter auf eine maximale Granulation von 300 μm klassiert werden.

BEISPIEL II

Dinkelschalen (Dinkelspelzen), die zu Beginn der Verarbeitung verwendet wurden, wurden zuerst entstaubt, um die im Staub enthaltenen Schadstoffe zuvor zu entfernen. Die Schalen wurden in geeigneten Vorrats- und Dosierbehältern gefördert, enthaltene Fremdkörper wie Metalle wurden beseitigt und eine gleichmäßige Dosierung sichergestellt. Als nächstes wurde mittels Heißwasser der Wassergehalt auf 50 bis 80% erhöht und ca. 1 - 40 Minuten bei einer erhöhten Temperatur von ca. 80°C gehalten. Die gekochten Schalen wurden nun mittels Ovalplattenpresse auf den geringst möglichen Wassergehalt (ca. 35%) reduziert. Anschließend wurden die Dinkelschalen mittels Mahltrocknung und eingebauter Sichtermühle auf abschließende 14% Feuchtigkeit und eine maximale Granulation von 300 μm klassiert.

BEISPIEL III

Haferschalen (Haferspelzen), die zu Beginn der Verarbeitung verwendet wurden, wurden zuerst entstaubt, um die im Staub enthaltenen Schadstoffe zuvor zu entfernen. Die Schalen wurden in geeigneten Vorrats- und Dosierbehältern gefördert, enthaltene Fremdkörper wie Metalle wurden beseitigt und eine gleichmäßige Dosierung sichergestellt. Als nächstes wurde mittels Dampf der Wassergehalt auf 50 bis 80% erhöht, 1% Tenside (Spüli) zur Reinigungsunterstützung zugegeben und ca. 1 - 40 Minuten bei einer erhöhten Temperatur von ca. 100°C gehalten. Die gekochten Schalen wurden nun mittels Schneckenpresse auf den geringst möglichen Wassergehalt (ca. 35%) reduziert. Anschließend wurden die Haferschalen mittels Bandtrockner auf abschließende 14% Endfeuchtigkeit getrocknet. Dieses getrocknete Gut wurde mittels Schneidemühle zerkleinert und durch eine Sichtermühle auf eine maximale Granulation von 300 μm klassiert.

TESTVERFAHREN

Das nachstehend angegebene Testverfahren wurde verwendet, um die oben aufgezeichneten Werte zu bestimmen.

Dinkelschale wurde mit einem Kochtopf für ca. 2 Minuten gekocht und anschließend kurzzeitig abtropfen gelassen. Mittels einer Ölpresse wurde nun diese Suspension ausgepresst und in einem Trockenschrank bei 85°C auf ca. 14% Feuchtigkeit getrocknet. Daraufhin wurde mittels Labormühle die Dinkelschale vermahlen und mit einer Laborsiebmaschine die Granulationsbandbreite auf <400 μm eingestellt.

LABORAUSWERTUNG

Schwermetalle: unverändert

Mykotoxine (Don+Zea): 50 - 70% reduziert
Keimzahl: 99,8% (12.000) reduziert

BACKVERSUCH

Der Backversuch ergab im Vergleich zu einem marktführenden Konkurrenzprodukt (Vitacel® von J. RETTENMAIER & SÖHNE GmbH + Co KG) keine wesentlichen Unterschiede. Eine leicht dunklere Färbung und einen sehr leichten, kaum wahrzunehmenden mälzigen Geschmack, welcher aber auf den längeren Trocknungsprozess zurückzuführen ist, war das Resultat zu einer gebleichten Haferhalmfaser des Marktführers.

FEUCHTIGKEIT

Die Feuchtigkeit wurde mittels Infrarotbestimmung mit 13,3% ermittelt

WASSERSPEICHERKAPAZITÄT

Die Wasseraufnahmekapazität wurde bei 2 g Probe, 20 ml destilliertem Wasser nach 10 minütiger Abstehzeit und darauffolgendem 5 minütigen Zentrifugieren bei 3.000 U/min auf 620% Wasseraufnahmekapazität zum eigenen Gewicht ermittelt.

GERUCH

Die Probe wurde in einem geschlossenen Behälter geschüttelt. Der Behälter wurde geöffnet und sofort von einer erfahrenen Person mit gutem Geruchssinn gerochen. Die Geruchsbeschreibung wurde von zwei unterschiedlichen Personen als "geruchlos" beschrieben.

GESCHMACKBEWERTUNG

Die Probe wurde von 2 Personen mit gutem Geschmacksinn mittels eines Teelöffels geschmeckt. Die Geschmacksbeschreibung wurde von zwei unterschiedlichen Personen als "Geschmacklos" beschrieben.

FARBE

Die Farbe kann als "Holzbeige" beschrieben werden.

GRANULATIONSBANDBREITE

100 g Produkt wurden mittels Laborsiebmaschinen mit selbst festgelegten Sieben gesiebt und gewogen:

$$1mm - 500 \ \mu m = 0,01\%$$

$$500 \ \mu m - 250 \ \mu m = 81\%$$

$$250\ \mu m - 0\ \mu m = 8{,}9\%$$

Die behandelten Getreideschalen können im Brot ihre Anwendung finden, da nicht nur die Ballaststoffe angereichert werden, sondern auch die backtechnologischen sowie die qualitativen Eigenschaften gegenüber vergleichbaren Produkten ohne Fasern verbessert sind. Somit können die Frischhaltung, die Gebäckausbeute, die Teigklebrigkeit, die Gefrierstabilität und die Krumenelastizität verbessert werden.

Die Getreideschalen können aber auch in Verbindung mit vielen anderen Lebensmitteln eingesetzt werden. Bei Fisch, Fleisch und Wurstwaren können die Textur, die Saftigkeit, den Auskoch- oder Ausbratverlust oder die Aufstrichfähigkeit verbessert werden. Zudem können die erfindungsgemäßen Produkte durch den hohen Ballaststoffanteil vielfältig in diätischen Lebensmitteln, Sportlernahrung oder auch in Fleischersatzstoffen eingesetzt werden.

## Patentansprüche

1. Verfahren zur Herstellung eines Lebensmittelerzeugnis, umfassend mehr als 40 Gew.-% Cellulose, und weniger als 0,0001 Gew.-% eines Bestandteils der Gruppe, bestehend aus Schimmelpilzen, Mykotoxinen, Radionukliden, pathogenen Keimen und Schwermetallen, ausgewählt aus Blei, Cadmium und Quecksilber, basierend auf 100 Gew.-% des Lebensmittelerzeugnisses, wobei das Lebensmittelerzeugnis eine Teilchengröße von kleiner als 0,5 mm, vorzugsweise kleiner als 0,1 mm, aufweist, wobei das Lebensmittelerzeugnis durch die Schritte in der folgenden Reihenfolge erhalten wird:

   a) Quellen von Pflanzenbestandteilen in Wasser, wobei die Pflanzenbestandteile aus einem oder mehreren Bestandteilen der Gruppe, bestehend aus Haferspelzen, Dinkelspelzen, Haferschalen und Dinkelschalen, ausgewählt sind, wobei das Quellen für 1 bis 5 Minuten in kochendem Wasser durchgeführt wird, und wobei die Pflanzenbestandteile in einer wässrigen Aufschlämmung, enthaltend 10 bis 75 % der rohen Pflanzenbestandteile, vorliegen, und
   b) Auspressen von Wasser aus den gequollenen Pflanzenbestandteilen des Schritts a), wobei zum Auspressen eine Schneckenpresse oder Ovalplattenpresse verwendet wird,

   wobei in dem Verfahren keine Aktivkohle, keine Bleichmittel und keine hochsauren, hochbasischen oder enzymatischen Zusatzstoffe eingesetzt werden, wobei unter hochsauren bzw. hochbasischen Zusatzstoffen solche mit pH-Werten $\leq 5{,}7$ bzw. $\geq 8{,}3$ verstanden werden.

2. Verfahren nach Anspruch 1, wobei nach Schritt b) ein Schritt des Trocknens und/oder Vermahlens durchgeführt wird.

3. Verfahren nach Anspruch 1 oder 2, wobei das Lebensmittelerzeugnis eine Teilchengröße von kleiner als 0,1 mm aufweist.

## Claims

1. A process for the production of a food product, comprising more than 40 % by weight cellulose and less than 0.0001 % by weight of a component from the group consisting of mould fungi, mycotoxins, radionuclides, pathogens and heavy metals selected from lead, cadmium and mercury, based on 100 % by weight of the food product, the food product having a particle size of less than 0.5 mm, preferably less than 0.1 mm, the food product being obtained by the steps in the following order:

   a) swelling of plant components in water, wherein the plant components are selected from one or more components from the group consisting of oat husks, spelled husks, oat hulls and spelled hulls, wherein the swelling is carried out in boiling water for 1 to 5 minutes, and wherein the plant components are present in an aqueous slurry containing 10 to 75% of the raw plant matter, and
   b) squeezing water out of the swollen plant components of step a), using a screw press or oval plate press for squeezing,

   wherein no activated charcoal, no bleaching agents and no highly acidic, highly basic or enzymatic additives being used in the process, wherein highly acidic or highly basic additives being understood as meaning those with pH values $\leq 5.7$ or $\geq 8.3$.

2. The method according to claim 1, wherein a step of drying and/or grinding being carried out after step b).

3. The method according to claim 1 or 2, wherein the food product has a particle size of less than 0.1 mm.

## Revendications

1. Procédé de production d'un produit alimentaire, comprenant plus de 40 % en poids de cellulose et moins de 0,0001 % en poids d'un composant provenant du groupe constitué de champignons de moisissure, mycotoxines, radionucléides, agents pathogènes et métaux lourds sélectionnés parmi le plomb, le cadmium et le mercure, basé sur 100 % en poids du produit alimentaire, le produit alimentaire ayant une taille particulaire inférieure à 0,5 mm, de préférence inférieure à 0,1 mm, le produit alimentaire étant obtenu par les étapes dans l'ordre suivant :

a) gonflement de composants végétaux dans de l'eau, dans lequel les composants végétaux sont sélectionnés parmi un ou plusieurs composants provenant du groupe constitué de balles d'avoine, de balles d'épeautre, de cosses d'avoine et de cosses d'épeautre, dans lequel le gonflement est effectué dans de l'eau bouillante pendant 1 à 5 minutes, et dans lequel les composants végétaux sont présents dans une barbotine aqueuse contenant 10 à 75 % de la matière végétale brute, et

b) presser l'eau des composants végétaux gonflés de l'étape a) en utilisant une presse à vis ou presse à plaque ovale pour le pressage,

dans lequel aucun charbon actif, aucun agent de blanchiment et aucun additif hautement acide, hautement basique ou enzymatique n'est utilisé dans le procédé, dans lequel des additifs hautement acides ou hautement basiques sont compris comme signifiant ceux avec des valeurs de pH $\leq$ 5,7 ou $\geq$ 8,3.

2. Procédé selon la revendication 1,
dans lequel une étape de séchage et/ou broyage est effectuée après l'étape b).

3. Procédé selon la revendication 1 ou 2,
dans lequel le produit alimentaire a une taille particulaire inférieure à 0,1 mm.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4181747 A
- CN 103549234
- CN 109295786
- US 5308618 A
- US 2003108652 A
- WO 2019161079 A
- EP 0455259 A2
- WO 2019241152 A1
- WO 2009137945 A1
- KR 20130043386 A
- WO 2019161079 A1

**In der Beschreibung aufgeführte Nicht-Patentliteratur**

- **LOPEZ-GUISA et al.** *American Institute of Nutrition,* 01. August 1988, 953-962